# EUROPEAN PATENT SPECIFICATION

(11) **EP 2 897 340 B1**
(45) Date of publication and mention of the grant of the patent: **28.12.2022**
(21) Application number: 15151373.6
(22) Date of filing: 16.01.2015
(51) Int. Cl.: H04L 65/80, H04L 65/60

(54) **ROUTING PROXY FOR ADAPTIVE STREAMING**
ROUTING-PROXY FÜR ADAPTIVES STREAMING
PROXY DE ROUTAGE POUR DIFFUSION EN FLUX ADAPTATIVE

(30) Priority: 17.01.2014 EP 14151619
(43) Date of publication of application: 22.07.2015
(73) Proprietor: Koninklijke KPN N.V., 3072 AP Rotterdam (NL); iMinds, 9050 Ghent (BE); Ghent University, 9000 Ghent (BE)
(72) Inventor: Famaey, Jeroen, 9111 Belsele (BE); Latré, Steven, 9160 Lokeren (BE)
(74) Representative: Wuyts, Koenraad Maria

(56) References cited:
- GB-A- 2 472 985
- US-A1- 2003 142 670
- US-A1- 2007 242 666
- US-A1- 2012 124 179
- US-B1- 6 553 376

## Description

### Field of the invention

The invention relates to a routing proxy server for adaptive streaming, and, in particular, though not exclusively, to a method for providing chunked content to a device comprising a streaming client using at least one proxy server, a proxy server using such method, a user device and a data structure for use with such proxy server and a computer program product using such method.

### Background of the invention

Adaptive Streaming techniques such as HTTP Adaptive Streaming (HAS) are novel video streaming techniques that transfer (usually temporally) chunked video over HTTP. A chunk might be referred to as a fragment (stored as part of a larger file) or a segment (stored as separate files). Chunks may have any playout duration, however typically the duration is between 2 second (e.g., Microsoft Smooth Streaming) and 10 seconds (e.g., Apple HTTP Live Streaming). A HAS client may render a video title by sequentially requesting chunks from the network, e.g. a content delivery network (CDN), process the requested chunks such that seamless rendering of the video title is assured.

A chunk may be available in one or more quality representations thereby allowing a client to seamlessly adapt the quality of the video from one chunk request to the next, based on current network and device conditions. The one or more locations (usually in the form of one or more URLs) from which chunks may be retrieved are stored in a manifest file. In Dynamic Adaptive Streaming over HTTP (DASH), an MPEG HAS standard, a manifest file may also referred to as the Media Presentation Description (MPD).

At the start of the streaming process, the client may first request the manifest file in order to determine typical HAS streaming parameters, including the quality representations, the bitrates associated with each representation, the number of chunks, and chunk locators representing the locations in the network where chunks can be accessed. Subsequently, the client may start requesting the chunks in sequence using the HTTP protocol. The quality representation in which each chunk is requested may be determined by the client's rate adaptation algorithm.

In a Content Delivery Network (CDN) or other media delivery platforms comprising multiple content servers and/or caches, HAS chunks may be relocated from one server to the other on the fly due to a plurality of reasons. Alternatively and/or in addition the chunk may not any more be accessible in one or several of the servers from which chunks may be retrieved. The reasons for this reallocation are often related to the dynamics of the content's request pattern, including shifts in popularity or request locality. The motives for such reallocation may include improving network parameters (e.g., delay, throughput), reducing financial costs (e.g., the monetary cost per bandwidth unit) or fulfilling resource demands (e.g., outgoing bandwidth). Due to the dynamic and online nature of such relocations, these relocations may result in HAS chunks being relocated from one server to the other during the course of a streaming process. Further, chunks may become suddenly very popular such that one or server of the servers that offer the chunks may become overloaded and no longer be accessible by client. As a result, the manifest file previously downloaded by the client will become out-dated.

State of the art HAS protocols usually employ a pull-based manifest file updating mechanism to handle chunk dynamics in the network. For example, the MPEG-DASH standard introduces several fields in the MPD specifically for this purpose. By way of these fields, the content provider may inform the client at which frequency it should request new MPDs. Although this approach may allow a client to refresh its MPD and thus update the list of chunks and their locations, it relies entirely on client initiative and provides no way for the client to know when actual changes in the chunk locations occur. As such, during the time period between changes in chunk location and MPD updates, the client does not know the actual chunk location and may request chunks from the old server that is no longer able to deliver the requested chunks.

If no provisions are made at the server side, the client will receive a message, e.g. HTTP 404 response message, from the server. As a consequence, the client will no longer be able to continue downloading chunks until the next MPD update. This may potentially result in buffer starvations and frame freezes. To overcome the problem of HTTP 404 replies and subsequent buffer starvations, the request routing node of a CDN may maintain a list of chunk locations and redirects the client to the correct delivery server based on HTTP- or DNS-based redirection. The main disadvantage of this approach however is the indirection caused by the presence of the request router. As this router is located somewhere across the Internet, it might introduce considerable latency for each and every chunk request.

Existing approaches that can cope with dynamic chunk locations include the user of multiple URLs in a manifest file, the use of a redirection rule or content duplication. For example, some HAS protocols may allow the use of multiple alternative URLs for a chunk in the manifest file. If the first URL does not exist (i.e., returns a HTTP 404 error response), the client may contact the further server in line. The client however does not know which server contains the chunk. Therefore, the client needs to contact each server until a server is found that can deliver the chunk. This way, the total network latency will increase and video quality will be reduced. Moreover, no guarantee can be given that one of these servers is able to deliver the chunk.

Further, when a chunk has relocated to another server, an HTTP redirect rule may be set on the original server to redirect clients that request the chunk to a new location or a grace period may be introduces where the content is not relocated from the original server immediately. Also these approaches either lead to increased latency, as the client will need to contact multiple servers before the chunk can be served or more storage space to be needed (wherein if the content is relocated too quickly, the HTTP 404 problem arises once again).

Hence, from the above it follows that there is a need in the art for improved systems and methods that allow HAS clients to retrieve HAS chunks in face of dynamic and online chunk reallocation. Additionally there is a need in the art for improved systems and methods that allow retrieval of HAS chunks in face of dynamic and online chunk reallocation with minimal performance loss (caused by the network and/or as server processing), minimal resource consumption (in the sense of bandwidth and storage space).

Prior art document US 2007242666 A1 presents a proxy apparatus for managing streaming requests for media data wherein it selects to which media server should a request be sent to, irrespective of the server to which the request is addressed.

Prior art GB 2 472 985 A shows a Media Resource Broker Location Function which receives requests from clients, inspects the request and makes a decision on which server should be used to service the request.

Prior art US 6 553 376 B1 presents a redirection function which intercepts media file requests sent to a media server and rewrites such requests so that they point to the local media file cache.

Prior art US 2012124179 A1 presents a proxy server that manages media-data traffic by modifying requested media segments as to conform to a certain media policy, wherein the related policy may take into account factors such as a subscription level associated with the requesting client, current network congestion conditions, the type of media described in the playlist, or the origin of the media described in the playlist.

### Summary of the invention

As will be appreciated by one skilled in the art, aspects of the present invention may be embodied as a proxy server (according to claim 10) and a user device (according to claim 12), a method (according to claim 1), and a computer program product (according to claim 17).

Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a microprocessor of a computer. Furthermore, aspects of the present invention may take the form of a computer program product embodied in one or more computer readable medium(s) for storing at least part of a manifest file, according to claim 16, having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non- exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or central processing unit (CPU), of a general purpose computer, special purpose computer, or other programmable data processing apparatus to produce a machine, such that the instructions, which execute via the processor of the computer, other programmable data processing apparatus, or other devices create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

It is an objective of the invention to reduce or eliminate at least one of the drawbacks known in the prior art. In an aspect the invention may relate to a computer-implemented method for providing chunked content to a device comprising a streaming client, preferably an HTTP adaptive streaming client, wherein said chunked content may be defined on the basis of a manifest file comprising one or more chunk identifiers and one or more associated chunk locators for locating one or more delivery nodes configured to deliver one or more chunks identified by said chunk identifiers.

In the inventon, the said method comprising determining whether a chunk identified by a chunk identifier in a chunk request message originating from said client should be delivered by a first delivery node, said chunk request message comprising a first network address associated with said first delivery node as a destination indicator, preferably said first network address comprising at least part of an IP address, an URL, or an equivalent thereof; and, if it is determined that said first delivery node should not deliver said chunk to said client, rewriting said first network address in said chunk request message into a second network address associated with a delivery node that is capable of delivering said chunk and sending said chunk request message to said second delivery node.

Hence, the method allows a proxy server to (transparently) intercept chunk request messages, e.g. HAS request messages, that are sent by a streaming client, e.g. a HAS client to a delivery node. The proxy determines whether the chunk specified within the request should be delivered by the delivery node that is specified in the chunk request message. If it is determined that there are no (better) alternative delivery node is available for delivery of the requested chunk, the chunk request message may be immediately forwarded by the proxy server to the delivery node identified in the chunk request message. Otherwise, if it is determined that the delivery node identified in the chunk request message cannot deliver the requested chunk and/or that another (second) delivery node is available that is more suitable for delivery of the requested chunk, the proxy server rewrites the network address in the chunk request message of the original (first) delivery node into the network address of a new second delivery node and forward the request to the second delivery node.

The method thus enables relaying chunk request messages that are sent by a streaming client on the basis of out-dated manifest file directly to the most suitable delivery node so that delays due to chunk relocations or other disturbances in the network (e.g. overload or a breakdown) are eliminated or at least substantially reduced. The method eliminates or at least strongly reduces the occurrence of delivery errors such as HTTP 404 errors that are caused by chunk requests that are sent to delivery nodes that cannot deliver the requested chunk. Further, the method does not require additional storage resources and is compatible with out-of-the-box HAS clients. As a result, the Quality of Experience for end users is improved as buffer starvations (e.g. due to 404 errors) will no longer occur and the redirection latency can be removed.

The said method may further comprise receiving a chunk response message associated with said chunk request message, said chunk response message comprising said second network address as a source indicator; before sending said chunk response message to said client, rewriting the second network address in said response message into said first network address.

Hence, when the proxy server receives a response, the proxy server may associate the response with its associated relayed chunk request message and rewrite the source network address of the response message to match the original destination network address of the associated request message. This way the process of relaying of chunk request message by the proxy server to the second delivery node is not noticed by the streaming client.

In an embodiment, said determining may further comprise using a relocation database for verifying whether a second network address different from said first network address is available for delivery of a chunk associated with said chunk identifier in said chunk request message.

In an embodiment, said relocation database may comprise one or more chunk identifiers and one or more associated network addresses of one or more delivery nodes that are configured to deliver chunks identified by said one or more chunk identifiers. The network addresses of the delivery nodes may be stored as IP address or, alternatively, as an URL that can be resolved into an IP address.

In an other embodiment, if a second network address exists, determining that said first delivery node associated with said first network address is no longer available for delivery of said chunk.

Hence, the proxy server may request a relocation database whether a chunk in the chunk request should be delivered to the client using another delivery node than indicated in the chunk request message. The relocation database may compare the chunk identifier specified within the request with chunk identifiers that are stored in the relocation database. A stored chunk identifier may be associated by the database with a network address of a delivery node that is capable of delivering the chunk identified in the chunk request message. If the chunk identifier in the chunk request does not match with chunk identifiers in the relocation database, the request may be immediately forwarded to the delivery node associated with the destination URL of the chunk request message. If there is a match, the proxy may change the (first) network address in the chunk request into a (second) network address that is stored in the relocation database.

In another embodiment, the method may comprise receiving relocation information, preferably from one or more delivery nodes and/or from a request routing node associated with one or more delivery nodes, more preferably said one or more delivery nodes forming at least part of a content delivery network, said relocation information comprising one or more chunk identifiers and one or more associated network addresses of delivery nodes that are configured for delivering chunks identified by said one or more chunk identifiers; updating at least part of said relocation database on the basis of said relocation information. Hence, the relocation database or the proxy server associated with the relocation database may comprise an interface for receiving relocation information from one or more delivery nodes or a request routing node that is associated with one or more delivery nodes that form a content delivery network (CDN).

Said determining is triggered if a condition is met. The one or more conditions are related to said chunk request message. In various embodiments, said condition may comprise at least one of: the type of content identified in said chunk request message; a client identifier associated with said chunk request message; a time at which request message was received by the proxy server. In these embodiments, the proxy may be triggered to determine whether the chunk in the chunk request message can be delivered by the delivery node that is addressed in said chunk request message on the basis of a certain condition, e.g. the type of content that is requested, time, the presence of certain information in the request message, the client from which the chunk request message originates, etc.

Conditional activation of the proxy server allows the relaying of chunk request messages for certain types of content types (e.g. ultra-high video quality) or only for clients that have access to certain premium streaming services. For example, the proxy server may be configured to trigger on the basis of part of the chunk name as defined in the manifest file. A predetermined chunk name format may for example comprise information on the quality (or bitrate) of the requested chunk. In case the request is related to (ultra) high definition (premium) content, the proxy server may be triggered. In the other cases, the proxy server may directly forward the chunk request message to the delivery node without checking it.

Said determining is triggered if marker information in said chunk request message is detected, by said proxy server. Hence, chunk request messages are marked on the basis of marker information. The marker information triggers the proxy server to start determining whether a chunk identified by a chunk identifier in a chunk request message originating from said streaming client can be delivered by a first delivery node on the basis of the information in the relocation database.

The marker information may be used to differentiate between different chunk requests in order to reduce the proxy server overhead. Unmarked chunk requests may be ignored by the proxy server and are processed by a delivery node in the conventional way. The marked chunk requests are checked by the proxy server on the basis of the information in the relocation database and diverted to the correct location so that latency caused by HTTP redirects are avoided.

In another embodiment the marker information may comprise at least part of a chunk identifier. In an embodiment said marker information may comprise at least one of a (binary) marker flag, a marker value, a client identifier and/or combinations thereof.

At east part of said marker information is inserted in said chunk request message by said client. Hence, during the generation of chunk request messages by the client, the client inserts marker information into the chunk request messages. The client may start and stop marking chunk request messages on the basis of certain information, e.g. a trigger message from the network, which the client may receive via an out-of-band communication channel from the network. For example, in an embodiment, a bi-directional Websocket communication channel (as defined in rfc6455) may be established between the client and a server in the network in order to trigger a client to start marking of chunk request messages.

The manifest file marker information. At least part of said marker information is used by said client for insertion in said chunk request message, In yet another embodiment, said marker information may include a token. In an embodiment, said token may be part of the destination URL of said chunk request message. In these embodiments, marker information may be inserted in the chunk request message on the level of the adaptive streaming protocol such as MPEG DASH or an equivalent thereof.

In an embodiment, said client may insert at least part of said marker information in the header of said chunk request message. In an embodiment, said marker information may be inserted as a cookie in said chunk request message.

In an embodiment, said first delivery node may be accessible by said client via a first access network and said second delivery node and said proxy server may be accessible by said client via a second access network. In another embodiment, said proxy server may be triggered during or in response to hand-over from said first access network to said second access network. Hence, the invention may not only be used in case chunks are relocated in the network, but also in mobile scenarios wherein a mobile streaming client may experience delays during a handover from a first mobile access network to a second mobile access network.

In another aspect, the invention relates to a proxy server for providing chunked content to a device comprising a streaming client, an HTTP adaptive streaming client. Said chunked content may be defined on the basis of a manifest file comprising one or more chunk identifiers and one or more associated chunk locators for locating one or more delivery nodes configured to deliver one or more chunks identified by said chunk identifiers.

Said server may comprise a computer readable storage medium having computer readable program code embodied therewith, and at least one microprocessor coupled to the computer readable storage medium, wherein responsive to executing the computer readable program code, the microprocessor is configured to perform executable operations.

Said executable operations include determining whether a chunk identified by a chunk identifier in a chunk request message originating from said client should be delivered by a first delivery node, said chunk request message comprising a first network address associated with said first delivery node as a destination indicator, preferably said first network address comprising at least part of an IP address, an URL, or an equivalent thereof; if it is determined that said first delivery node should not deliver said chunk to said client, rewriting said first network address in said chunk request message into a second network address associated with a delivery node that is capable of delivering said chunk and sending said chunk request message to said second delivery node.

In a further embodiment, said executable operations includes: receiving a chunk response message associated with said chunk request message, said chunk response message comprising said second network address as a source indicator;
before sending said chunk response message to said client, rewriting the second network address in said response message into said first network address.

In another embodiment, said executable operations further comprise: determining whether said chunk request message comprises marker information, preferably at least one of a marker flag, a marker value, a least part of a chunk identifier, a client identifier and/or combinations thereof;
if said marker information is detected, determining whether said chunk can be delivered by a first delivery node.

In another aspect, the invention relates to a user device comprising a streaming client configured for sending one or more marked chunk request messages to a proxy server as described above.

The said one or more marked chunk request messages are configured to trigger said proxy server. In a further embodiment, said user device may comprise a computer readable storage medium having computer readable program code embodied therewith, and at least one microprocessor coupled to the computer readable storage medium, wherein responsive to executing the computer readable program code, the processor is configured to perform executable operations.

Said executable operations may comprise: receiving a manifest file comprising one or more chunk identifiers and one or more associated chunk locators for locating one or more delivery nodes configured to deliver one or more chunks identified by said chunk identifiers, for requesting chunks identified by said chunk identifiers.

Said executable operations may comprise: receiving marker information for marking chunk request messages, a marked chunk request message triggering said proxy server to determine whether a chunk identified by a chunk identifier in a chunk request message originating from said client should be delivered by a first delivery node;

Said executable operations may comprise: generating a marked chunk request message on the basis of said manifest file and said marker information.

Said marked chunk request message further comprise: generating a marked chunk message on the basis of marker information in said manifest file, preferably by inserting said marker information as a token in the URL of said chunk request message; or, generating a marked chunk message by inserting at least part of said at least part of said marker information as a cookie in said chunk request message.

In a further aspect, the invention relates to a non-transitory computer-readable storage media for storing at least part of a manifest file for use by a user device as described above. In an embodiment, said manifest file may comprise: one or more chunk identifiers and one or more chunk locators for enabling said user device, preferably a streaming client in said user device, to generate one or more chunk request messages; and, marker information for marking at least part of said one or more chunk request messages, a marked chunk request message triggering a proxy server to determine whether a chunk identified by a chunk identifier in a chunk request message originating from said client should be delivered by a first delivery node.

In an embodiment, said manifest file further comprises a marker indicator for instructing said user device to generate a marked chunk request on the basis of said marker information in said manifest file.

The invention may also relate to a computer program product comprising software code portions configured for, when run in the memory of a computer, executing the method steps according to as described above.

The invention will be further illustrated with reference to the attached drawings, which schematically will show embodiments according to the invention. It will be understood that the invention is not in any way restricted to these specific embodiments, but by the appended claims.

### Brief description of the drawings

**Fig. 1** schematically depicts a conventional process of delivering chunks to a client.
**Fig. 2** depicts a schematic of a content delivery system comprising a routing proxy according to an embodiment of the invention.
**Fig. 3** depicts the process of dynamic rerouting of chunk requests according to an embodiment of the invention.
**Fig. 4** depicts the process of dynamic rerouting of chuck requests according to another embodiment of the invention.
**Fig. 5A** and **5B** depict the process of marking a request message according to an embodiment of the invention.
**Fig. 6A** and **6B** depict the process of marking a request message according to an embodiment of the invention.
**Fig. 7A** and **7B** depict a routing proxy and a user device according to various embodiments of the invention.
**Fig. 8** depicts a content delivery network using a routing proxy according to an embodiment of the invention.
**Fig. 9** depicts a content delivery system for mobile clients according to an embodiment of the invention.
**Fig. 10** depicts the delivery of chunks to a mobile client using at least one routing proxy according to an embodiment of the invention.
**Fig. 11** depicts a client or server system for use in content delivery systems according to an embodiment of the invention.

### Detailed description

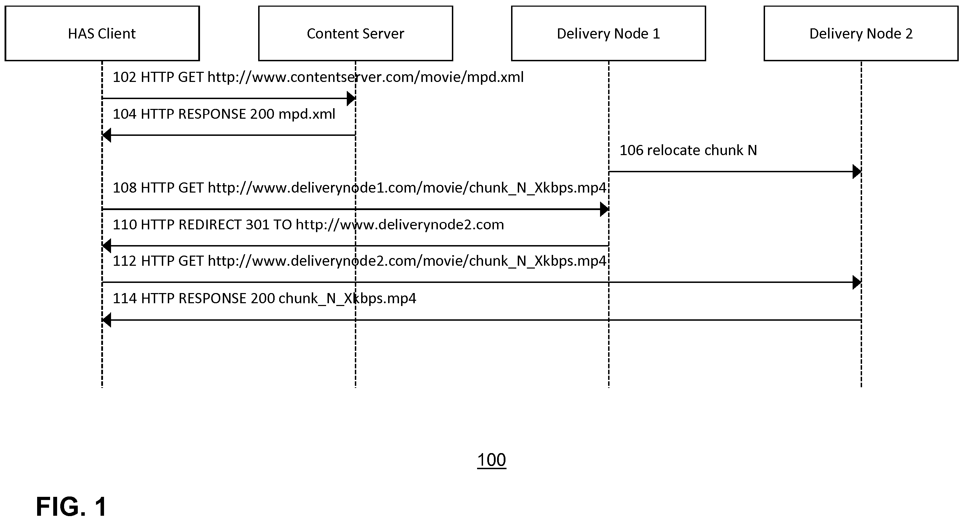

**Fig. 1** schematically depicts a conventional process of the delivery of chunks to a client by a content delivery network (CDN) or another media delivery platform comprising multiple content servers and/or caches, wherein chunks may be relocated from one server to the other on the fly. When a chunk is relocated from a first server to a second server, an HTTP redirection rule may be set on the first server to redirect clients that request the chunk to the new location. In particular in the process of in **Fig. 1** a client may request the streaming of a movie title from a content server (step **102).** In response to the request, the content server may send a manifest file back to the client (step **104)** and start request chunks on the basis of information in the manifest file (e.g. chunk identifiers and chunk locators, e.g. in the form of one or more URLs) from a first media server, e.g. a first delivery node that is part of a CDN.

More general, a manifest file may refer to a special data structure identifying chunk identifiers for identifying chunks building a chunked content item and location information comprising references to one or more network nodes. Such reference, which may be referred to as a chunk locator, may point to a delivery node, i.e. a network node configured to deliver an identified segment; or, alternatively, to a network node that is able to determine one or more network nodes which may be able to deliver an identified segment. In yet another embodiment, a chunk locator may also point to location on a delivery node. For example, different chunk locators may point to different folders defined in one delivery node.

During the process of requesting chunks, the first delivery node may relocate chunk N to a second delivery node (step **106).** Hence, when the client requests this chunk from the first delivery node (step **108),** it will receive an HTTP redirection message comprising the URL of the second delivery node (step **110).** The client may then use the URL in the redirection message to re-requests the chunk from the second delivery node (step **112)** which in response to the request message sends the requested chunk to the client (step **114).** As shown in **Fig. 1****,** this approach may lead to increased latency, as the client will need to contact multiple servers before a chunk can be served. When many chunks are relocated, the redirects may cause a substantial latency. Additionally, if a chunk is relocated several times, a chain of redirects can arise.

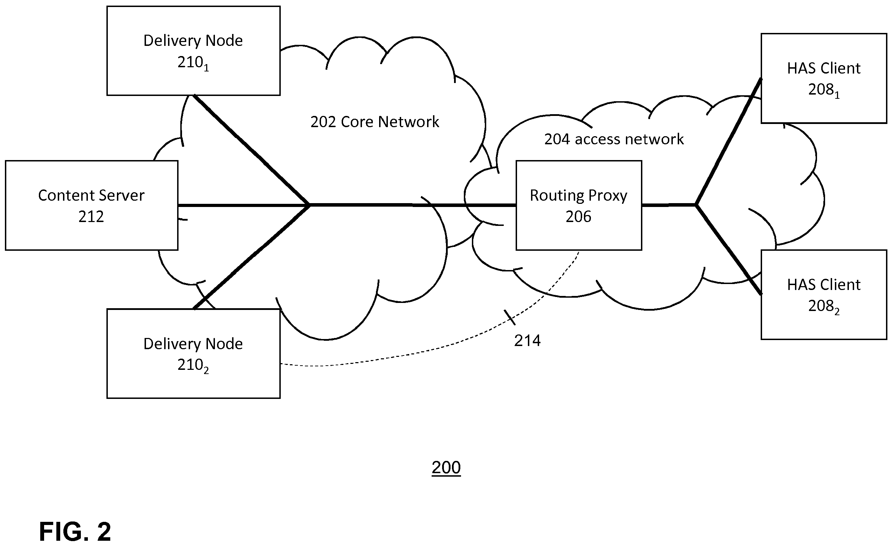

In order to overcome the problems associated with chunks that are relocated during streaming of chunks to a client, a dynamic routing proxy server is used. **Fig. 2** depicts a schematic of a content delivery system comprising a routing proxy according to an embodiment of the invention. In particular, **Fig. 2** depicts a network topology view of a content delivery system comprising at least one content server **212** and one or more delivery nodes **210_{1,2}** that may be connected via one or more networks (e.g. a core network **202** and an access network **204)** to clients **208_{1,2}**.

The delivery nodes may deliver chunks to the client on the basis of an adaptive streaming protocol such as the HTTP adaptive streaming (HAS) protocol. Examples of adaptive streaming protocols include Apple HTTP Live Streaming [http://tools.ietf.org/html/ draft-pantos-http-live-streaming-07], Microsoft Smooth Streaming [http://www.iis.net/download/ SmoothStreaming], Adobe HTTP Dynamic Streaming [http://www.adobe.com/products/ httpdynamicstreaming], 3GPP-DASH [TS 26.247 Transparent end-to-end Packet-switched Streaming Service (PSS); Progressive Download and Dynamic Adaptive Streaming over HTTP] and MPEG Dynamic Adaptive Streaming over HTTP [MPEG DASH ISO/IEC 23001-6]. HTTP allows an efficient, firewall-friendly and scalable scheme for delivering chunked (segmented) streams to HAS-enabled clients. The delivery nodes may transmit packets associated with the chunks over a unicast connection to a client. Alternatively and/or in addition packets may be transmitted over a broadcast (e.g. a DVB connection), multicast, overlay multicasting, multimedia broadcast multicast connection to clients.

A HAS enabled client may be implemented in a user device, which may generally relate to a (mobile) content play-out device such as an electronic tablet, a smart-phone, a notebook, a media player, a home gateway or DASH enabled devices such as a DASH-enabled HbbTV display device. Alternatively, the user device may be a set-top box or content storage device configured for processing and temporarily storing content for future consumption by a content play-out device, which has access to the stored content.

The content server **212** may host manifest files associated with video titles that may be accessed or purchased by the clients. Alternatively, the content server may be configured to generate a manifest file associated with a video title when a video title is purchased via a website or the like. The delivery nodes **210_{1,2}** may host the chunks that are identified in the manifest file.

In the system of **Fig. 2****,** a client may request a manifest file from the content server via e.g. a website. The manifest file that the client receives may comprise chunk identifiers and location information (e.g. one or more URLs) that point to chunks that are stored at a particular delivery node, e.g. first delivery node **210₁**. At some point in time, at least part of the chunks defined in the manifest file is relocated from the first delivery node to the second delivery node **210₂**. The information associated with the relocation of the chunks (e.g. the chunk identifier, the original destination and the relocation destination of a chunk) may be notified by a delivery node to a routing proxy **206** via a control interface **214.** The information associated with the relocation may be referred to as relocation information. The routing proxy may register the relocation information in a routing table (which may also be referred to as a relocation database) in the memory of routing proxy. The relocation information may include (part of) the chunk identifiers of the relocated chunks, (part of) the location of the delivery node where the relocated chunks are stored after and/or before relocation. The routing proxy may be deployed at a location in the network where the requests of many clients pass through. For example, in **Fig. 2** the routing proxy may be located somewhere at a central location of the access network **204** (e.g., at the root of the access or aggregation network). Preferably the routing proxy is implemented as an HTTP server that may be configured to receive and/or transmit HTTP request and response messages.

The routing proxy may transparently divert chunk requests of relocated chunks to the new delivery node (in this example, the second delivery node) on the basis of the relocation information. The term "transparently" refers to the fact, that the routing proxy routes the messages associated with relocated chunks (i.e. chunk request messages and associated response messages) in a way that the client neither notices that the request message are routed to another delivery node as indicated in the request message nor that the response messages originate from the second delivery node. Transparent routing of the messages may be achieved by the routing proxy rewriting network addresses in the request and response message on the basis of the relocation information that is registered with the routing proxy. A network address may take the form an IP address, TCP ports and/or an URL or URI, which can be resolved via a suitable scheme, e.g. a DNS scheme, into an IP address. The term rewriting a network address may refer to any process for modifying and/or changing at least part of the destination network address and/or port in a request message or modifying and/or changing at least part of the destination or source network address in a response message. For example, in case of HTTP over TCP/IP the destination IP address and, sometimes, the destination TCP port may be rewritten by a proxy server on the basis of relocation information in order to send the package to a new destination. Alternatively and in addition, the destination URL or URI of an HTTP message that can be resolved in the network using e.g. a DNS scheme into a destination IP address. This process will be described in more detail hereunder.

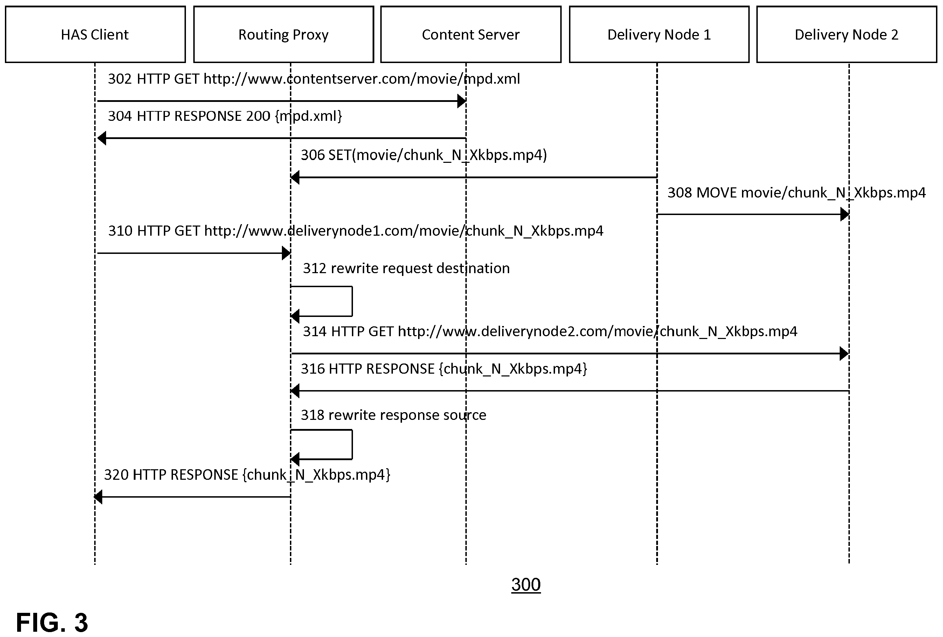

**Fig. 3** depicts the process of dynamic rerouting of chunk requests, in particular HTTP requests, according to an embodiment of the invention. The process may start with a client requesting a content server the delivery of a video title (step **302).** In response to the request, e.g. a HTTP GET message, the content server may send a response message, e.g. an HTTP RESPONSE message, comprising the manifest file back to the client (step **304)** and start request chunks on the basis of information in the manifest file from a first server, e.g. a first delivery node that is part of a CDN (not shown).

During that process, the first delivery node may relocate chunk N to a second delivery node (step **306).** Further, the routing proxy may receive relocation information that chunk N has relocated to another delivery node (in this example the second delivery node) (step **308)** and store this relocation information in a routing table. The client may continue sending a chunk requests via the routing proxy to the first delivery node. Chunk request may be intercepted and processed by the routing proxy (step **310).** In particular, the routing proxy may compare the chunk identifier in the chunk request with the chunk identifiers in the routing table. If a match is found, the routing proxy may modify (rewrite) the destination network address of the chunk request (e.g. (at least part of) the destination IP address of the network node where the request message, e.g. a HTTP GET message, is sent to and/or (at least part of the) destination URL associated with the network node where the request message is sent to on the basis of the relocation information (step **312)** such that the destination of the chunk request message is a new delivery node which is capable of delivery of the chunk that is identified in the chunk request message (in the example the second delivery node).

Thereafter, the routing proxy may forward the chunk request to the new destination (step **314).** In response to the chunk request, the second delivery node may send the requested chunk in a response message back to the routing proxy (step **316).** The routing proxy may then rewrite (at least part) of the destination and source network address of the response message on the basis of the information of the routing table (step **318)** and transparently forward the modified response to the client (step **320).**

As shown in **Fig. 3****,** in the proposed solution, no HTTP 404 errors will occur (or at least HTTP 404 errors will be strongly reduced), the latency will not increase and no additional storage resources are needed, and it is compatible with out-of-the-box HAS clients. As a result, the proposed routing proxy increases Quality of Experience for end users, as 404-related buffer starvations will no longer occur and the redirection latency can be removed.

The routing proxy may enable a dedicated routing process relatively close to the clients (e.g., in the access network that connects the clients to the Internet). The proxy server may comprise a remote management interface that may be used by content providers or content delivery systems (CDNs) to pass relocation information associated with relocated chunks (e.g. the chunk identifier, the original destination and the relocation destination of a chunk) to the redirection proxy. Specifically, whenever the location of a chunk changes, the content provider may pass the identifier of the chunk and its new location to the proxy's interface. Optionally, the proxy's interface may allow an expiration value to be specified, defining the time after which the relocation information associated with a particular chunk identifier may be removed from the routing table.

The routing proxy according to the invention combines modification of the network addresses in request and response messages respectively with the dynamic data model of the routing table that may be used to map chunk identifiers to locations, as well as an interface that allows other network entities, e.g. delivery nodes or a request routing node in a CDN, to adjust the mapping in the routing table. The combination of these functionalities may realize a dynamic routing process that is capable of handling on-the-fly chunk relocations in content delivery systems.

The proxy transparently intercepts chunk requests sent by clients located within the same network domain. The proxy compares the chunk identifier specified within the request with those currently present in the routing table. If there is no match, the request is immediately forwarded to its destination URL. If the chunk identifier in the chunk request message matches a chunk identifier in the routing table, it may determine a second (destination) network address that is stored with the matched chunk identifier in the routing table. The proxy may change the first (destination) network address in the chunk request message into the second (destination) network address forward the request to the new delivery node.

In a large-scale scenario with many clients, the number of chunk requests may take immense proportions. Hence, in an embodiment, the proxy server may be triggered if one or more conditions are met. For example, the proxy server may be triggered to determine whether the chunk in the chunk request message can be delivered by the delivery node that is addressed in said chunk request message on the basis of a certain condition, e.g. the type of content that is requested, time, the presence of certain information in the request message, the client from which the chunk request message originates, etc.

Conditional activation of the proxy server allows the relaying of chunk request messages for certain types of content types (e.g. ultra-high video quality) or only for clients that have access to certain premium streaming services. For example, the proxy server may be configured to trigger on the basis of part of the chunk name as defined in the manifest file. A predetermined chunk name format may for example comprise information on the quality (or bitrate) of the requested chunk. In case the request is related to (ultra) high definition (premium) content, the proxy server may be triggered. In the other cases, the proxy server may directly forward the chunk request message to the delivery node without checking it. This way the amount of times the routing proxy needs to check the routing table is reduced.

In another embodiment, chunk requests may be marked with marker information determining whether or not the proxy should check the routing table and rewrite the segment. The marker information may reduce the amount of times the routing proxy needs to check the routing table. Unmarked segments will be ignored by the routing proxy and - if necessary - may be redirected by a delivery node in the conventional manner. As a consequence, the marker information (e.g. a marker flag, a marker value, a least part of a chunk identifier, a client identifier and/or combinations thereof) may introduce differentiation between client requests. A subset of the requests (e.g. chunk requests comprising marker information) will trigger the proxy server and - if the chunk request is associated with a relocated chunk - the chunk request will be diverted by the routing proxy to the correct location so that latency caused by HTTP redirects are avoided and the user experience and video quality may be improved. The remainder of requests is redirected to the correct server using HTTP redirect messages resulting in reduced video quality.

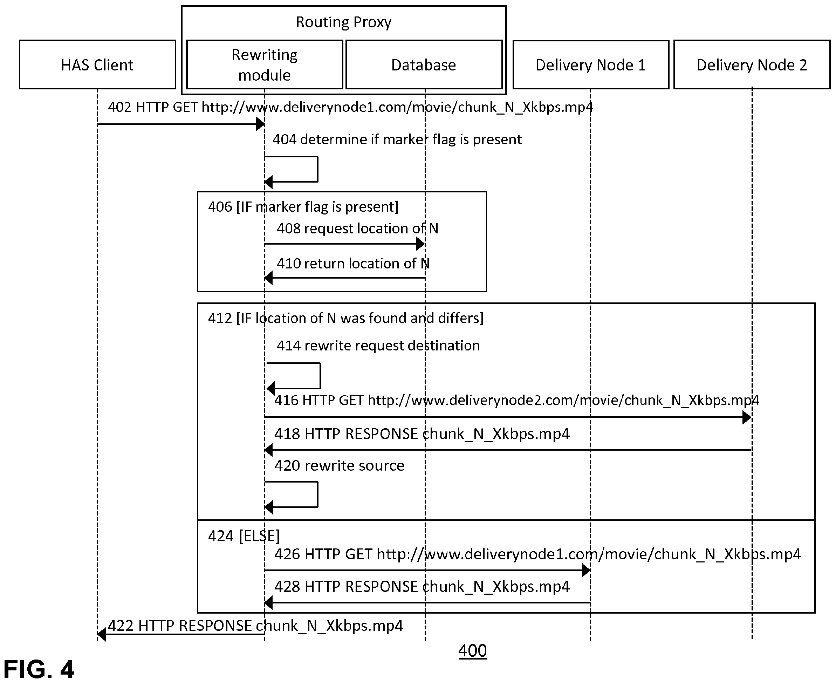

**Fig. 4** depicts the process of dynamic rerouting of chuck requests according to another embodiment of the invention. In particular the process of **Fig. 4** depicts the network address rewriting process that is executed by the routing proxy in order to reroute request to the correct delivery node. The routing proxy may comprise a rewriting module and a relocation database (which may also referred to as routing table) comprising the relocation information of relocated chunks that are notified to the routing proxy. Further, in an embodiment, the client may comprise a marking module that is configured for marking chunk request with a marker (e.g. a marker flag or a marker value) that for signalling the routing proxy to check the routing table.

The process may start with the client transmitting a chunk request to the routing proxy (step **402).** The rewriting module may check whether the request comprises a marker flag that signals the routing proxy that the request is a chunk request that needs to be checked for relocated chunks (step **404).** Then, if the rewriting module detects marker information (e.g. a "marker flag") (step **406),** it may send a query comprising at least the chunk identifier to the relocation database (step **408).** If the relocation database returns location information (step **410),** e.g. an URL, associated with a delivery node that comprises the requested chunk and if the location information differs from the destination (e.g. destination URL) in the chunk request (step **412),** then the rewriting module may rewrite the destination of the chunk request message on the basis of the location information that is provided by the relocation database (step **414).** Thereafter, the routing proxy may forward the modified chunk request to the modified destination (in this case the second delivery node) (step **416),** which may send the requested chunk in a response message to the routing proxy (step **418).** The rewriting module may then rewrite the source and destination of the response message to that it is sent to the client requesting the chunk (step **424).** In case the rewriting module may determine that the request message does not comprise a marker flag, the chunk identifier was not found in the data base; and/or, the location in the database does not differ from the original location (step **424),** the routing proxy may forward the request message without any modification to the destination in the request message (in this example the first delivery node) (step **426)** and to receive the response message originating from the destination (step **428).** In both cases, the routing proxy may thereafter send the modified response message comprising the chunk to the client (step **422).**

A request message may be marked on the basis of marking information in various ways. In an embodiment, the marking information may be embedded as part of the chunk name. For example, a predetermined naming scheme for chunks may be used in order to send chunks of different (quality) representations to a delivery node. The rewriting module may be triggered on the basis of certain information in the naming scheme, e.g. information about a certain quality of bitrate of the chunk. This way premium OTT services associated with streaming of high quality streaming may trigger the proxy server to start checking these chunk requests. This embodiment has the advantage the streaming client does not need to perform any actions to mark specific chunk request. It may just use the chunk names (as part of the URLs) that are provided via the manifest file to the client.

In another embodiment, the client may comprise a marking module that is configured to insert marking information in certain chunk request messages. Alternatively and/or another network element in the path between the client and the proxy server, e.g. a home gateway, may comprise a marking module for marking chunk request messages. The marking module may insert the marking information (e.g. a marker flag, a marker value, a least part of a chunk identifier, a client identifier and/or combinations thereof) in various ways in the chunk request message.

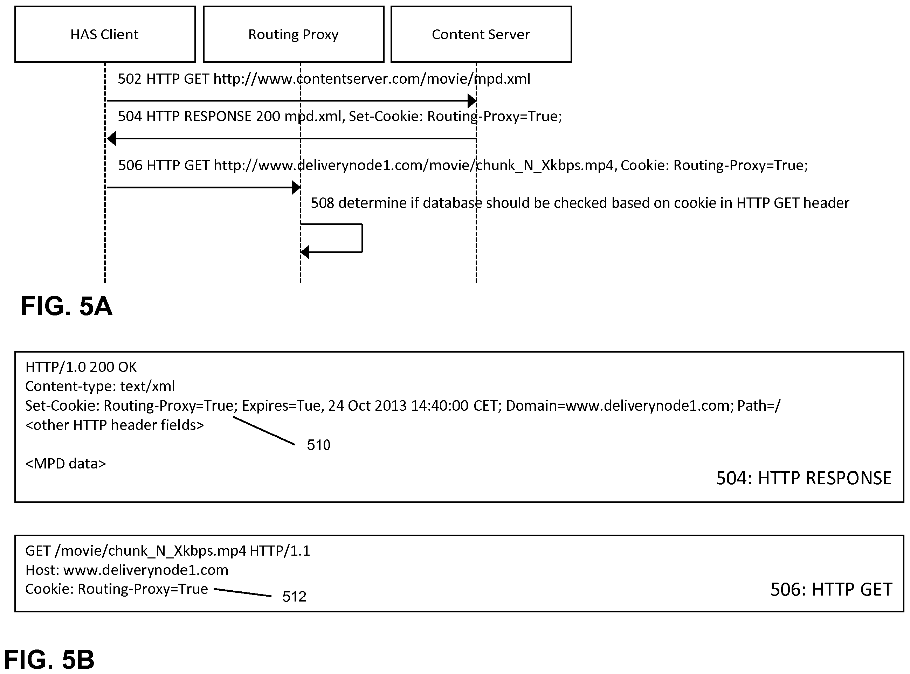

**Fig. 5A** and **5B** depict the marking of a chunk request according to an embodiment of the invention. In particular, **Fig. 5A** depicts a process of marking a request message on the basis of a cookie, i.e. a small piece of data that may be used to store and share information during an HTTP session. **Fig. 5B** depicts examples of HTTP messages comprising cookie or cookie information for marking chunk requests.

An HTTP server may send a cookie (in the form of one or more HTTP headers) with an HTTP response to the client. The client may send (part of) the cookie data with an HTTP request to the same server. Hence, if the server wants a specific request to be automatically diverted by the routing proxy, it may add a predetermined cookie to the HTTP response containing the MPD file. Then, a client, in particular the marking module in or associated with the client, may add the cookie to all chunk requests or certain predetermined chunk requests (e.g. a chunk request associated HD content) it is sending out. When the routing proxy intercepts a request, it may check for the presence of such a cookie in the request. If a cookie is detected by the routing proxy, it may check the relocation database whether or not the request needs to be diverted. If no cookie is detected, the request may be ignored by the routing proxy and forwarded to the delivery node that is specified in the initial chunk request message.

The process in **Fig. 5A** may start with a client requesting a manifest file from a content server (step **502).** The request may have the following format:
GET http://www.contentserver.com/movie/mpd.xml HTTP/1.1
Host: www.contentserver.com

Thereafter, the content server may send the manifest file (e.g. an MPD in xml format) in a response message to the client (step **504).** In an embodiment, the response may have the following format (see also **Fig. 5B****):**
HTTP/1.0 200 OK
Content-type: text/xml
Set-Cookie: Routing-Proxy=True; Expires=Tue, 24 Oct 2013 14:40:00 CET;
Domain=www.deliverynode1.com; Path=/
<other HTTP header fields>
<MPD data>

The standardized 'Set-Cookie' header field allows the server to specify a cookie key-value pair. Additional header fields may be added. For example, in an embodiment, the header field may comprise the time when the cookie was created and/or expires or a time period in which the cookie is valid. In another embodiment, the header field may comprise (part of) a domain and/or path for which it is valid. In the example of **Fig. 5A** and **5B****,** the cookie key 'Routing-Proxy' **510,512** in response and request messages is used. This key may be any string and/or value that is agreed upon by the server and routing proxy. In the example of **Fig. 5A****,** the cookie key **510** may comprise marker information, e.g. a binary value (a marker flag) a unique content identifier and/or client identifier, that may trigger the routing proxy to check the chunk identifier in the request message.

Then, when a client starts requesting chunks from one or more delivery nodes that are identified in the manifest file (step **506).** In an embodiment, at least part of the HTTP chunk request may have the following format (see also **Fig. 5B****):**
GET /movie_name/movie_name_5000kbps/seg_1.mp4 HTTP/1.1
Host: www.deliverynode1.com
Cookie: Routing-Proxy=True

The intercepting routing proxy now may easily determine on the basis of the Routing-Proxy key whether or not to check the relocation database for a request. In this particular example, the Routing-Proxy flag in the 'Cookie: Routing-Proxy=True' **512** HTTP header field was set so that the routing proxy will send a query to the relocation database (step **508).**

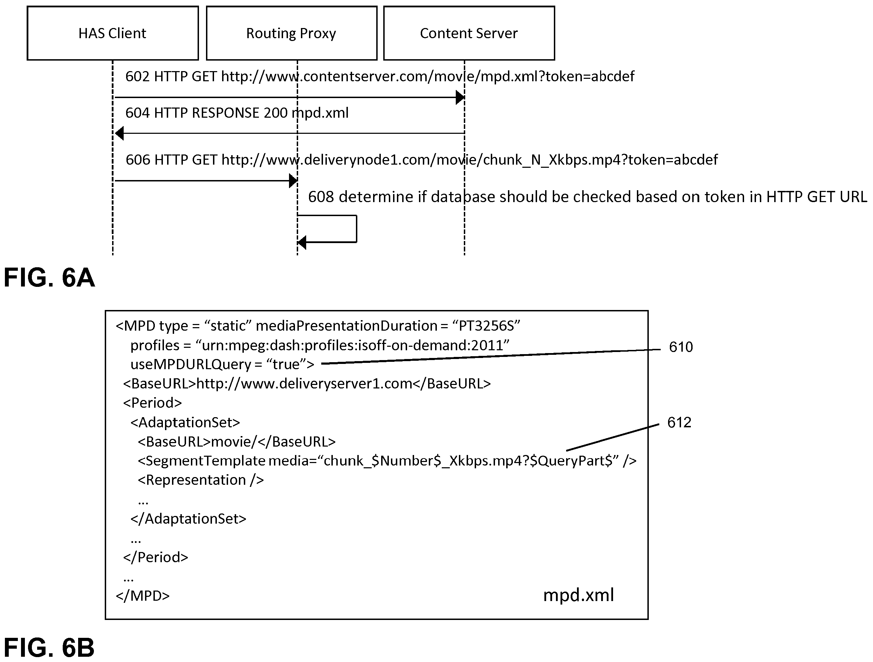

**Fig. 6A** and **6B** depict the marking a request message according to an embodiment of the invention. In particular, **Fig. 6A** depicts a flow diagram of a process for sending marked chunk requests to a delivery node and **Fig. 6B** depicts an MPD that may be used by the client to mark such chunk requests.

Contrary to the cookie-based approach for marking a request on the HTTP protocol level, the token-based approach may realize marking of a request on the MPEG-DASH protocol level, i.e. by information provided in the manifest file. For example, when a user accesses the website of a content provider in order to buy a certain content file, the user may receive a predetermined token that is generated by the content server of the content provider. This token may be added to the request that is sent to the content server in order to retrieve a manifest file (in this case a XML-based MPD mpd.xml) (step **602).** Such URL may for example take the following form:
HTTP://www.contentserver.com/movie_name/movie_name.mpd?token=abcdef

The MPD that is subsequently sent in a response message to the client (step **604)** may comprise a variable useMPDUrlQuery **610** (e.g. a binary flag). When parsing the MPD, the useMPDUrlQuery variable may instruct the client, in particular the marker module in or associated with the client, to use URL tokens for all or certain chunk requests. In an embodiment, the MPD may contain a URL template comprising a certain format for inserting the token in the URL (or appending the token to the URL). In an embodiment, the URL template **612** in the MPD may have the following format (see **Fig. 6B****):**
HTTP://www.deliverynode1.com/movie_name/movie_name_5000kbps/seg_$Number$.mp4?$quer ypart$

Here the parameter $querypart$ may be used by the client to insert a predetermined token value in the URL using e.g. a simple string replacement that may be used for marking a chunk request.. The token may be interpreted by the routing proxy as an instruction to check the routing table for the chunk ID in the request (as e.g. described with reference to **Fig. 4****).** Hence, the client may use the information in the MPD to generate a chunk request in the form of a HTTP GET request that may take the following form:
GET /movie_name/movie_name_5000kbps/seg_2.mp4?token=abcdef HTTP/1.1
Host: www.deliverynode1.com

The token "abcdef" that is added to the URL may be detected by the routing proxy in order to determine whether or not to check the relocation database. Hence, this way the token may be used as marker information that triggers the proxy server. As shown in **Fig. 6A** and **6B****,** the token-based marking scheme may provide a very flexible way of marking all or a predetermined part of chunks in a video title. For example, a chunked video title may comprise different representations (e.g. conventional, high and ultra-high definition video, 3D, etc.) wherein each representation comprises a set of chunks URLs that forms the video title in that representation. In that case, a token may be assigned to one or more representations, e.g. an HD video representation, as a premium service.

Reducing the proxy overhead by way of marking the chunk request (using cookies, tokens, or some other marking scheme) may enable the routing proxy capabilities for certain clients and/or for certain requests and disable the routing proxy capabilities in other cases. The routing proxy according to the invention may lead to decreased latency, and as a consequence increased throughput and video quality. Hence, this effect may be leveraged to provide differentiation between users and services. For example, users with a paying subscription (e.g., gold subscription users) may be allowed to employ the routing proxy. On the other hand, free users (e.g., Bronze Subscription Users) would have to rely on the default HTTP redirection mechanisms to be redirected to the correct server. Similarly, the system may support streaming of premium content via the routing proxy in order to guarantee quality of services. In that case, enabling or disabling the proxy would not depend on the user that is requesting the content, but rather on the type of content that is requested.

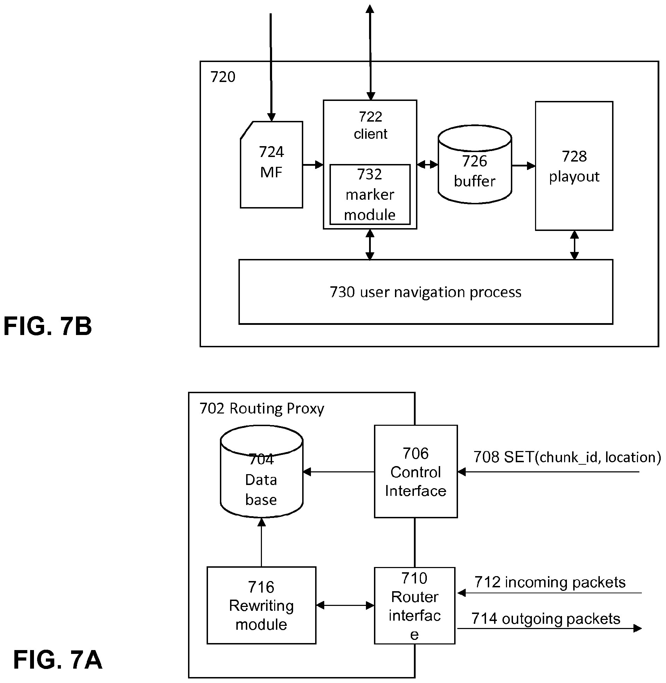

**Fig. 7A** depicts a routing proxy according to an embodiment of the invention. The routing proxy **702** may comprise a router interface **710** for receiving incoming and outgoing (request and response) messages, a rewriting module **716,** a relocation database **704** and a control interface **706** for receiving relocation information from delivery nodes and for updating the relocation database on the basis of the relocation information. As already described with reference to **Fig. 2-6****,** the relocation database may comprise relocation information of chunks that are stored in the network (e.g. a CDN) and that are relocated from one delivery node to another delivery node. The relocation information may comprise chunk identifiers (chunk_id) and the new location (e.g. URL or IP address) of the chunks associated with the chunk identifiers. The control interface of the routing proxy may be configured to receive relocation information from a CDN or other network storage entities and store the relocation information in the relocation database.

The rewriting module may process (part of) the incoming and outgoing packets received by the proxy in the way as described with reference to **Fig. 4****.** In particular, the rewriting module may receive chunk requests from clients for: 1) checking whether the requested chunks are relocated or not; 2) for modifying the chunk request, in particular the destination network address, on the basis of information in the relocation database if it is determined that the chunk should not be delivered by the delivery node as identified in the chunk request message; and, 3) for sending the modified chunk request to a new delivery node which is capable of delivering the requested chunk to the client (the new destination). Further, the rewriting module may: 1) receive chunk response messages from the new destination; 2) modify the destination and source network addresses in the chunk response message; and, 3) send the modified chunk response message comprising the requested chunk to the client. Here, the source network address in the response message may be rewritten into the destination network address of the initial chunk request message so that the client does not notice that the message was relayed to another delivery node and the destination network address may be rewritten into the network address of the client.

Further, as described in detail with reference to **Fig. 5** and **6****,** the rewriting module may be triggered by the proxy server if a chunk request message originating from a client is marked (i.e. comprises marker information) so that only marked requests are checked for relocation by the rewriting module. Alternatively and/or in addition the rewriting module may be triggered by the proxy server if one or more conditions associated with a chunk request message are met.

The routing proxy may be configured as a transparent proxy (also referred to as an intercepting proxy), which are commonly used for e.g. enforcing company web browsing policies, or performing caching. Such transparent proxy may be configured to intercept communication packets at the network layer without the need for a special client configuration.

Intercepting traffic may be performed using a variety of known techniques. For example, a router may intercept a subset or all of the packets that pass through it and transparently redirect those to the proxy (which could be a separate machine or be a software process residing on the router machine). The redirection may be performed by rewriting the MAC address of the packet, or by encapsulating the packet into a new packet that is sent to the proxy component (known as Generic Routing Encapsulation or GRE tunneling). The proxy subsequently intercepts all redirected packets by using e.g. a Network Address Translation (NAT) technique (which includes rewriting source and destination IP addresses and/or ports).

Other alternatives, e.g. a transparent proxy scheme based on the Linux TPROXY (short for transparent proxy) may also be used. TRPROXY does not rely on NAT, and consequently does not replace the source address thereby effectively making the proxy transparent for both client and server side. TPROXY provides the following three features, which allow true transparent proxy functionality:
- redirect sessions destined to the outer network to a local process using a packet filter rule;
- make it possible for a process to listen to connections on a foreign address;
- make it possible for a process to initiate a connection with an address as a source.

**Fig. 7B** depicts a user device according to an embodiment of the invention. The user device **720** may comprise an adaptive streaming (AS) client **720,** which is configured to communicate with one or more media servers in the network and to enable streaming of content on the basis of an adaptive streaming protocol. The user device may generally relate to a content processing device, e.g. a (mobile) content play-out device such as an electronic tablet, a smart-phone, a notebook, a media player, etc. In some embodiment, a user device may be a set-top box or content storage device configured for processing and temporarily storing content for future consumption by a content play-out device.

A user may connect a user device to a network, e.g. the Internet, browse a website of a content provider comprising video title links and select one. Upon selection of a link, e.g. an URL, a manifest file may be sent to the client. Here, the term manifest file may generally refer to a special data structure comprising chunk identifiers (descriptors) identifying the chunks building the video title or a part thereof, location information of a (set of) network node(s), e.g. media server(s), which may be configured to either deliver the segments to the client or to provide the client with information where the chunks may be retrieved and, optionally, chunk control information determining the relation between the chunks which may be used by the client to correctly determine a sequence of chunks for play-out. In some cases, e.g. live stream, multiple manifest files may be used to playout the media. Different protocols may use different names for a manifest file. For example, in the DASH streaming protocol a manifest file may be referred to as a media presentation description (MPD).

As illustrated in **Fig. 7B****,** the manifest file may be stored in a manifest cache **724** and parsed and structured into a chunk list, i.e. a logical data structure, comprising information for retrieving chunks, e.g. chunk identifiers (e.g. the chunk file names) and chunk locators, e.g. a predetermined parts of URL(s), for determining where these chunks may be retrieved, and play-out control information for controlling the play-out of the chunks, i.e. the relation between the chunks (e.g. time relationship, quality relationship and/or spatial relationship).

The AS client may use the location information in the manifest cache in order to retrieve chunks from a media server or one or more delivery nodes associated with a content delivery network (CDN). The chunks may be retrieved using a (chunk) transfer protocol (typically this would be HTTP, but also RTSP/RTP, FTP and other protocols could be used) and temporarily stored into a buffer **726.** Further, a video play-out function **728** (which may also referred to as the media engine) may play-out chunks stored in the buffer on the basis of the information in the manifest cache.

The segment retrieval function may be configured to retrieve chunks such that the buffer is loaded with a predetermined number of chunks before play-out is started. Furthermore, during play-out, the client continuously retrieves segments on the basis of the manifest file so that sufficient segments are stored in the segment buffer. The client may accept and handle chunk retrieval instructions from a user navigation function **730** that is connected to a (graphical) user interface (not shown) of the user device. This way, a user is able to navigate through the chunks as defined by the manifest file.

A marker module **732** in or associated with the client may be configured to insert marking information in certain chunk request messages. The marking module may insert the marking information (e.g. a marker flag, a marker value, a least part of a chunk identifier, a client identifier and/or combinations thereof) in at least part of the chunk request messages, e.g. in the header and/or body of the message. In various embodiments, the marking module may be configured to use the token-based and/or cookie-based

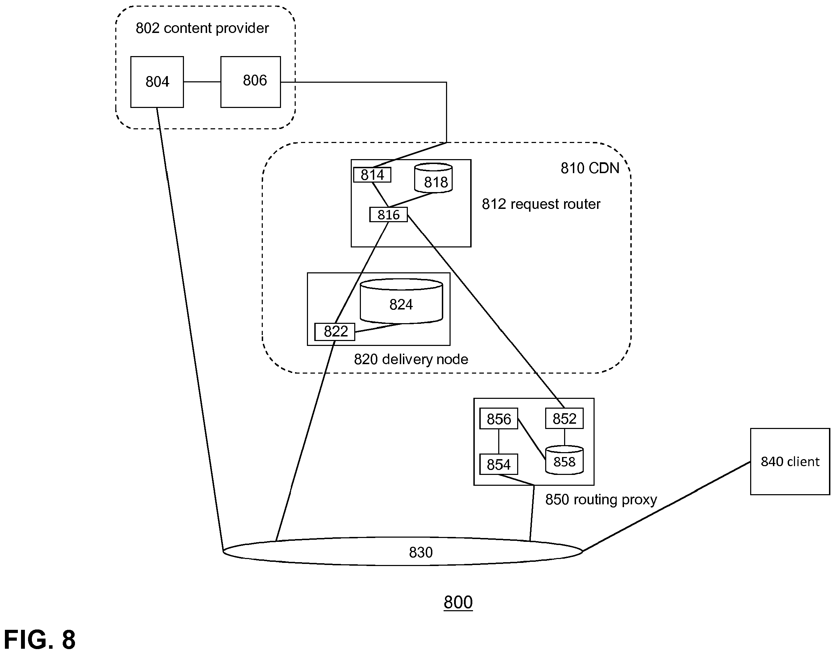

**Fig. 8** depicts a content delivery network using a routing proxy according to an embodiment of the invention.
The content delivery system may comprise a content source **802,** e.g. a content provider, and a CDN **810** that is configured to deliver chunks of video titles to clients **840.** A client may connect to the content source and the CDN via a transport network **830.**

The CDN may comprise one or more delivery nodes **820** and at least one central CDN node **812.** In practice, a CDN may comprise tens to thousands geographically located delivery nodes. A delivery node may comprise or be associated with a controller **822** and a cache **824** for storing and buffering chunks. A central CDN node may comprise or may be associated with an ingestion node (or content origin function, COF) **814** for controlling ingestion of content (chunks) from the content source, a content location database **818** for maintaining information about where content is stored within a CDN and a CDN control function (CDNCF) **816** for controlling the distribution of one or more copies of the content to the delivery nodes and for redirecting clients to appropriate delivery nodes (a process also known as request routing). The node hosting the CDNCF may be referred to as the request routing (RR) node. A customer may purchase content, e.g. video titles, from the content provider by sending a request to a web portal (WP) **804,** which is configured to provide title references identifying purchasable content items. The CDNCF may manage the locations where chunks may be retrieved using the content location database.

Modern CDNs often employ one or multiple request routing (RR) nodes as entry points for clients. The client sends its HTTP requests to an RR node, which subsequently redirects (e.g., using HTTP or DNS redirect) the client request to a suitable delivery node (e.g., based on load conditions or the client's geographical location). To perform its tasks, a RR node may comprise up-to-date information on the location of content. In particular, at which delivery nodes of the CDN chunks are stored. Hence, in an embodiment, the RR node may be configured to contact the routing proxy **850,** in particular the control interface **852** of the routing proxy. The RR node may register chunks that have been relocated within the CDN or that have been relocated to one or more delivery nodes of another CDN and the RR node may use this information to generate relocation information that may be send to the control interface **852** of the routing proxy so that it can be stored in the relocation database **858.** When a client requests chunks from the CDN, the requests are intercepted by the proxy **854** and examined by the rewriting module as described in detail with reference to **Fig. 2-7****.** When the CDN has many (e.g. thousands) of delivery nodes, multiple routing proxies may be used to eliminate or at least substantially reduce the problems related to dynamic relocation of chunks in the network. Hence, the routing proxy according to the invention may be easily integrated with the network entities, such as a RR node, of a CDN.

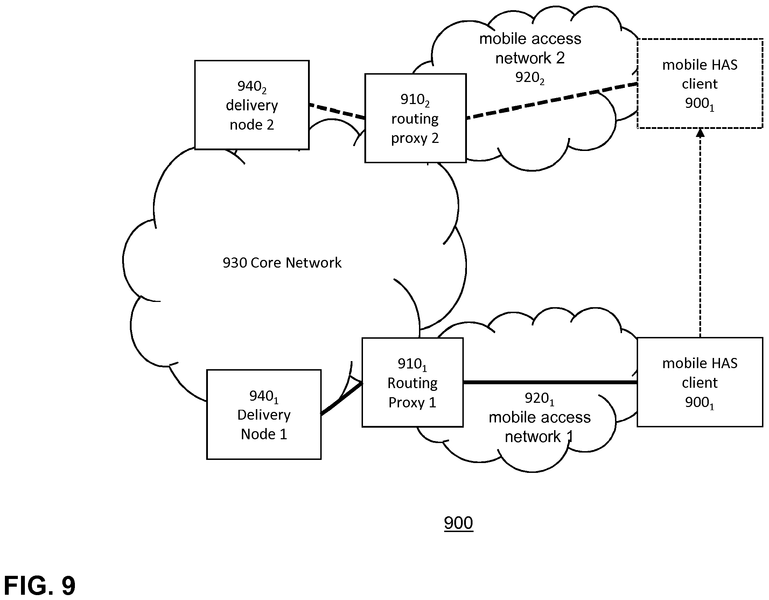

**Fig. 9** depicts a content delivery system for mobile clients according to an embodiment of the invention. In particular, **Fig. 9** depicts a network topology view of a content delivery system comprising one or more delivery nodes **940_{1,2}** of one or more CDNs (or another multimedia delivery platform) that may be connected via one or more networks, in this case a core network **930** and a mobile access network **920₁**, to one or more clients **900_{1,2}**. A routing proxy in the mobile access network or aggregation network may process request and response messages as described with reference to **Fig. 2-8****.**

In the content delivery system of **Fig. 9****,** a client may be a mobile client, i.e. a client that is implemented in a mobile device such as an electronic tablet, a smart phone, a multimedia device in a car, etc. that is connected to wireless access network and that uses a manifest file (e.g. an MPD) to request chunks from the first delivery node. When a mobile device moves from the area of the first wireless access network **920₁** in to the area of a (neighbouring) second wireless network **920₂**, the device may experience handover delays. Such handover delays may often lead to temporary service degradations, as the connection of the client to the mobile access network and the delivery node needs to be reinitialized.

For example, in **Fig. 9** the mobile client **900₁** may be first wirelessly connected via a first mobile access network **920₁** and a first routing proxy to the first delivery node wherein the first delivery node may be optimally located (in terms of delay and available bandwidth) for streaming video content to the mobile client. Requests and response messages may be passed through the first routing proxy and rerouted depending on the relocation database in the first routing proxy. When the mobile client physically moves and becomes connected to the second mobile access network **920₂**, the mobile client may continue requesting chunks on the basis of the manifest file that comprises URLs pointing to the first delivery node. This node however may no longer provide the optimal streaming connection in the situation that the client is connected to the second mobile access network so that degradation in the user experience may be experienced.

In order to counter this problem, the routing proxies that are located in the path of the messages between the mobile client and to delivery nodes of a CDN may be configured to divert chunk requests originating from the mobile client to at least one delivery node that can optimally deliver the chunks to the mobile client (or that can at least deliver the chunks within a certain bandwidth). For example, in an embodiment, the RR node of a CDN that registers the current locations of chunks in the network may determine hand-over information for the routing proxies that are associated with mobile access networks. The hand-over information may comprise the locations of delivery nodes that comprise content (e.g. in the form of chunks) that clients may access via a content server as e.g. described with reference to **Fig. 2****.** The RR node of the CDN may send the hand-over information to the control interface of the different routing proxies, which may store the hand-over information in their relocation databases.

Hence, when during a handover the mobile client connects to a further mobile access network, the requests and responses of the client will pass through the second routing proxy which is configured to divert chunk request originating from the mobile client to a delivery node (in this case the second delivery node) that is optimal for streaming content to the mobile client on the basis of its current access network. This way the streaming path may be diverted to a server, which is more suitable (e.g., in terms of available bandwidth or total end-to-end delay) for delivering chunks to the mobile client.

The proposed routing proxy according to the invention supports the automatic diversion of requests to the optimal delivery node based on the client's current access network. Specifically, if each mobile access network comprises at least one routing proxy, their databases may be configured to divert clients (either all or a subset of them) immediately to the optimal delivery node, based on the network to which the client connects, as well as the content it requests.

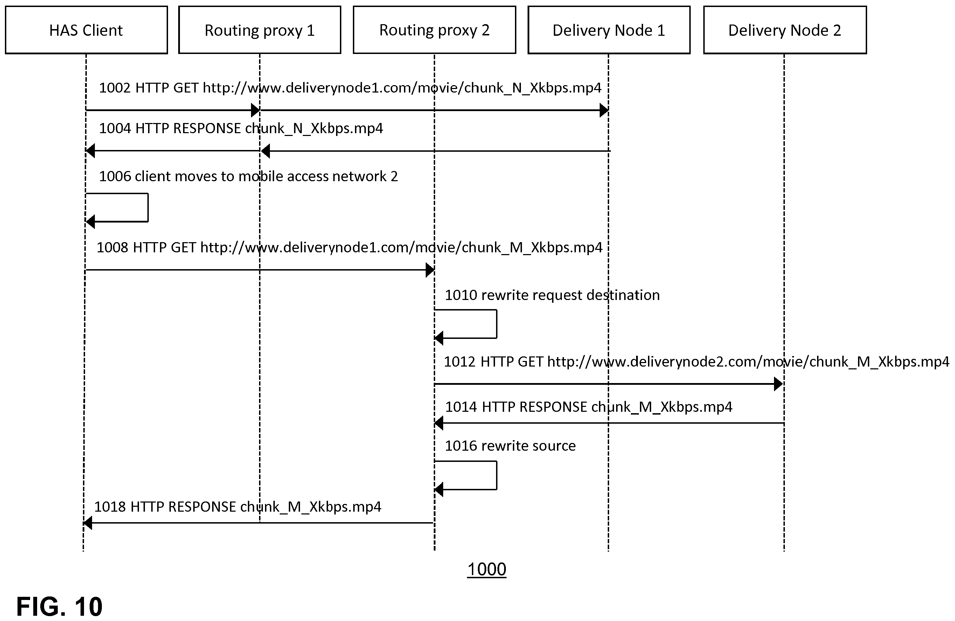

**Fig. 10** depicts the delivery of chunks to a mobile client using at least one routing proxy according to an embodiment of the invention. The process in **Fig. 10** may start with a mobile client requesting chunks from a first delivery node (step **1002)** by transmitting chunk request via a first routing proxy to the first delivery network and receiving chunks in response messages via the first routing proxy (step **1004).** Thereafter, the mobile client leaves the area of a first wireless access network into the area of a second wireless access network which triggers a handover process in which the mobile clients connects to the second wireless access network (step **1006).** The mobile clients may continue requesting chunks (step **1008)** from the first delivery node via the second wireless access network on the basis of the manifest file (that was generated and optimized for use with the first wireless access network). The second routing proxy may receive chunk request originating from the mobile client and check the chunk id and the destination in the chunk request in the relocation database of the second routing proxy and modify the destination (step **1010)** so that the chunk request is sent by the routing proxy to the new second delivery node (step **1012).** The second destination node may send a response message comprising the requested chunk back to the routing proxy (step **1014),** which rewrites the source network address in the response message (step **1016)** to the destination network address of the initial chunk request message. Thereafter the second routing proxy may send the response message to the client (step **1018).**

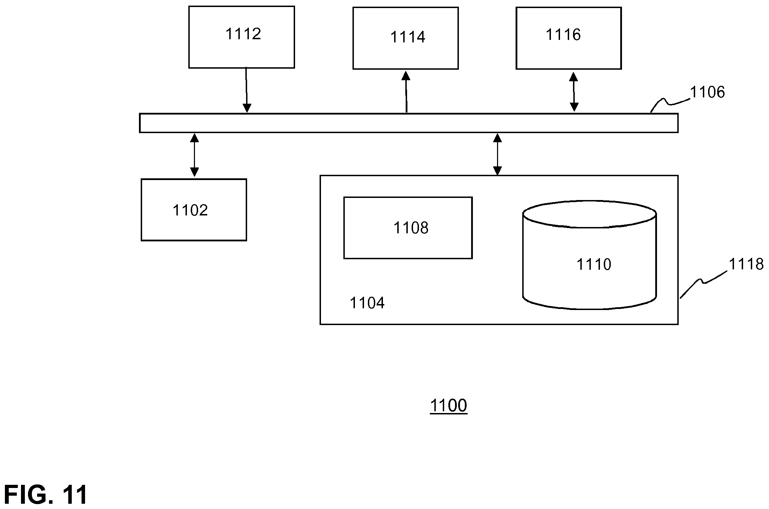

**Fig. 11** is a block diagram illustrating an exemplary data processing system that may be used in systems and methods as described with reference to **Fig. 1-10****.** Data processing system **1100** may include at least one processor **1102** coupled to memory elements **1104** through a system bus **1106.** As such, the data processing system may store program code within memory elements **1104.** Further, processor **1102** may execute the program code accessed from memory elements **1104** via system bus **1106.** In one aspect, data processing system may be implemented as a computer that is suitable for storing and/or executing program code. It should be appreciated, however, that data processing system **1200** may be implemented in the form of any system including a processor and memory that is capable of performing the functions described within this specification.

Memory elements **1104** may include one or more physical memory devices such as, for example, local memory **1108** and one or more bulk storage devices **1110.** Local memory may refer to random access memory or other non-persistent memory device(s) generally used during actual execution of the program code. A bulk storage device may be implemented as a hard drive or other persistent data storage device. The processing system **1100** may also include one or more cache memories (not shown) that provide temporary storage of at least some program code in order to reduce the number of times program code must be retrieved from bulk storage device **1110** during execution.

Input/output (I/O) devices depicted as input device **1112** and output device **1114** optionally can be coupled to the data processing system. Examples of input device may include, but are not limited to, for example, a keyboard, a pointing device such as a mouse, or the like. Examples of output device may include, but are not limited to, for example, a monitor or display, speakers, or the like. Input device and/or output device may be coupled to data processing system either directly or through intervening I/O controllers. A network adapter **1116** may also be coupled to data processing system to enable it to become coupled to other systems, computer systems, remote network devices, and/or remote storage devices through intervening private or public networks. The network adapter may comprise a data receiver for receiving data that is transmitted by said systems, devices and/or networks to said data and a data transmitter for transmitting data to said systems, devices and/or networks. Modems, cable modems, and Ethernet cards are examples of different types of network adapter that may be used with data processing system **1150.**

As pictured in **Fig. 11****,** memory elements **1104** may store an application **1118.** It should be appreciated that data processing system **1100** may further execute an operating system (not shown) that can facilitate execution of the application. Application, being implemented in the form of executable program code, can be executed by data processing system **1100,** e.g., by processor **1102.** Responsive to executing application, data processing system may be configured to perform one or more operations to be described herein in further detail.

In one aspect, for example, data processing system **1100** may represent a client data processing system. In that case, application **1118** may represent a client application that, when executed, configures data processing system **1100** to perform the various functions described herein with reference to a "client". Examples of a client can include, but are not limited to, a personal computer, a portable computer, a mobile phone, or the like.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The invention is solely defined by the appended claims. The description of the present invention has been presented for purposes of illustration and description, wherein modifications and variations will be apparent to those of ordinary skill in the art without departing from the scope of the appended claims.

## Claims

1. Method for providing chunked content to a device (720) comprising a HTTP adaptive streaming client (722), said chunked content being defined on the basis of a manifest file comprising one or more chunk identifiers and one or more associated chunk locators for locating one or more delivery nodes configured to deliver one or more chunks identified by said chunk identifiers, **characterized in** said method comprising at least a microprocessor of a proxy server (206, 702) executing computer readable program code for:
determining whether a chunk identified by a chunk identifier in a chunk request message originating from said client should be delivered by a first delivery node (210₁), said chunk request message comprising a first network address associated with said first delivery node as a destination indicator, wherein said determining is triggered if one or more conditions associated with said chunk request message, are met;
if it is determined that said first delivery node should not deliver said chunk to said client, rewriting said first network address in said chunk request message into a second network address associated with a second delivery node (210₂) that is capable of delivering said chunk and sending said chunk request message to said second delivery node;
receiving a chunk response message associated with said chunk request message, said chunk response message comprising said second network address as a source indicator;
before sending said chunk response message to said client, rewriting the second network address in said response message into said first network address.

2. Method according to claim 1 wherein said determining comprises:
using a relocation database for verifying whether a second network address different from said first network address is available for delivery of a chunk associated with said chunk identifier in said chunk request message

3. Method according to claim 2 further comprising:
receiving relocation information, said relocation information comprising one or more chunk identifiers and one or more associated network addresses of delivery nodes that are configured for delivering chunks identified by said one or more chunk identifiers;
updating at least part of said relocation database on the basis of said relocation information.

4. Method according to any of claims 1-3 wherein said one or more conditions comprise at least one of: the type of content identified in said chunk request message; a client identifier associated with said chunk request message; a time at which said chunk request message was received by said proxy server.

5. Method according to any of claims 1-4 wherein said determining is triggered if marker information in said chunk request message is detected.

6. Method according to claim 5 wherein at least part of said marker information is inserted in said chunk request message by said client.

7. Method according to claim 6 wherein said manifest file comprises marker information and at least part of said marker information is used by said client for insertion in said chunk request message.

8. Method according to claims 6 or 7 wherein said client inserts at least part of said marker information in the header of said chunk request message.

9. Method according to any of claims 1-8 wherein said first delivery node is accessible by said client via a first access network and said second delivery node and said proxy server is accessible by said client via a second access network.

10. A proxy server (206, 702) configured for providing chunked content to a device (720) comprising an HTTP adaptive streaming client (722), said chunked content being defined on the basis of a manifest file comprising one or more chunk identifiers and one or more associated chunk locators for locating one or more delivery nodes configured to deliver one or more chunks identified by said chunk identifiers,
said proxy server **characterized in that** it comprises a computer readable storage medium having computer readable program code embodied therewith, and at least one microprocessor coupled to the computer readable storage medium, wherein responsive to executing the computer readable program code, the microprocessor is configured to perform executable operations comprising:
determining whether a chunk identified by a chunk identifier in a chunk request message originating from said client should be delivered by a first delivery node (210₁), said chunk request message comprising a first network address associated with said first delivery node as a destination indicator, wherein said determining is triggered if one or more conditions associated with said chunk request message, are met;
if it is determined that said first delivery node should not deliver said chunk to said client, rewriting said first network address in said chunk request message into a second network address associated with a second delivery node (210₂) that is capable of delivering said chunk and sending said chunk request message to said second delivery node;
receiving a chunk response message associated with said chunk request message, said chunk response message comprising said second network address as a source indicator;
before sending said chunk response message to said client, rewriting the second network address in said response message into said first network address.

11. A proxy server according to claim 10 wherein said executable operations further comprise:
determining whether said chunk request message comprises marker information;
if said marker information is detected, determining whether said chunk can be delivered by a first delivery node;

12. A user device (720) comprising a HTTP adaptive streaming client (722) configured for sending one or more marked chunk request messages comprising marker information to a proxy server (206, 702) configured according to claims 10 or 11, wherein said one or more marked chunk request messages are configured to trigger said proxy server, said user device comprising:
a computer readable storage medium having computer readable program code embodied therewith, and at least one microprocessor coupled to the computer readable storage medium, wherein responsive to executing the computer readable program code, the microprocessor is configured to perform executable operations comprising:
receiving a manifest file comprising one or more chunk identifiers and one or more associated chunk locators for locating one or more delivery nodes configured to deliver one or more chunks identified by said chunk identifiers, for requesting chunks identified by said chunk identifiers; the user device **characterized in** the processor further configured to perform executable operations comprising:
receiving marker information for marking chunk request messages, a marked chunk request message triggering said proxy server to perform the method according to claim 1;
generating a marked chunk request message on the basis of said manifest file and said marker information;
sending said marked chunk request message to the proxy server.

13. User device according to claim 12 wherein generating said marked chunk request message further comprise:
generating a marked chunk message on the basis of marker information in said manifest file; or,
generating a marked chunk message by inserting at least part of said at least part of said marker information as a cookie in said chunk request message.

14. User device according to claim 12 wherein said client is configured for starting or stopping the marking of chunk request messages on the basis of a trigger message from the network, which trigger message the client may receive via an out-of-band communication channel from a network.

15. User device according to claim 14, wherein said out-of-band communication channel is a bi-directional Websocket communication channel as defined in rfc6455 established between the client and a server in the network in order to trigger a client to start marking of chunk request messages.

16. Non-transitory computer-readable storage medium for storing at least part of a manifest file, said manifest file comprising:
one or more chunk identifiers and one or more chunk locators arranged for enabling a user device to generate one or more chunk request messages, **characterized in that** said manifest file further comprises:
marker information arranged for marking at least part of said one or more chunk request messages, a marked chunk request message arranged for triggering a proxy server to determine whether a chunk identified by a chunk identifier in a chunk request message originating from said client should be delivered by a first delivery node.

17. Computer program product comprising software code portions configured for, when run in the memory of a computer, executing the method steps according to any of claims 1-9.

## Patentansprüche

1. Verfahren zum Liefern von gestückeltem Inhalt zu einer Vorrichtung (720), die einen adaptiven HTTP-Streaming-Client (722) enthält, wobei der gestückelte Inhalt auf der Grundlage einer Manifestdatei definiert ist, die eine oder mehrere Stückkennungen und einen oder mehrere zugeordnete Stückzeiger zum Orten eines oder mehrerer Übermittlungsknoten, die konfiguriert sind, ein oder mehrere Stücke, die durch die Stückkennungen identifiziert sind, zu übermitteln, umfasst und das Verfahren **dadurch gekennzeichnet ist, dass** mindestens ein Mikroprozessor eines Proxy-Servers (206, 702) computerlesbaren Programmcode ausführt zum:
Bestimmen, ob ein Stück, das durch eine Stückkennung in einer Stückanforderungsnachricht, die vom Client ausgeht, identifiziert ist, durch einen ersten Übermittlungsknoten (210₁) übermittelt werden soll, wobei die Stückanforderungsnachricht eine erste Netzadresse, die dem ersten Übermittlungsknoten zugeordnet ist, als einen Zielindikator umfasst und das Bestimmen ausgelöst wird, wenn eine oder mehrere Bedingungen, die der Stückanforderungsnachricht zugeordnet sind, erfüllt sind;
Umschreiben, wenn bestimmt wird, dass der erste Übermittlungsknoten das Stück nicht zum Client übermitteln soll, der ersten Netzadresse in der Stückanforderungsnachricht in eine zweite Netzadresse, die einem zweiten Übermittlungsknoten (210₂), der das Stück übermitteln und die Stückanforderungsnachricht zum zweiten Übermittlungsknoten senden kann, zugeordnet ist;
Empfangen einer Stückantwortnachricht, die der Stückanforderungsnachricht zugeordnet ist, wobei die Stückantwortnachricht die zweite Netzadresse als einen Quellindikator umfasst;
Umschreiben vor dem Senden der Stückantwortnachricht zum Client der zweiten Netzadresse in der Antwortnachricht in die erste Netzadresse.

2. Verfahren nach Anspruch 1, wobei das Bestimmen Folgendes umfasst:
Verwenden einer Verlagerungsdatenbank zum Überprüfen, ob eine zweite Netzadresse, die von der ersten Netzadresse verschieden ist, zur Übermittlung eines Stücks, das der Stückkennung in der Stückanforderungsnachricht zugeordnet ist, verfügbar ist.

3. Verfahren nach Anspruch 2, das ferner Folgendes umfasst:
Empfangen von Verlagerungsinformationen, wobei die Verlagerungsinformationen eine oder mehrere Stückkennungen und eine oder mehrere zugeordnete Netzadressen von Übermittlungsknoten, die zum Übermitteln von Stücken, die durch die eine oder die mehreren Stückkennungen identifiziert sind, konfiguriert sind, umfassen;
Aktualisieren mindestens eines Teils der Verlagerungsdatenbank auf der Grundlage der Verlagerungsinformationen.

4. Verfahren nach einem der Ansprüche 1-3, wobei die eine oder die mehreren Bedingungen Folgendes umfassen: den Typ des Inhalts, der in der Stückanforderungsnachricht identifiziert ist; und/oder eine Client-Kennung, die der Stückanforderungsnachricht zugeordnet ist; und/oder eine Zeit, zu der die Stückanforderungsnachricht vom Proxy-Server empfangen wurde.

5. Verfahren nach einem der Ansprüche 1-4, wobei das Bestimmen ausgelöst wird, wenn Markierungsinformationen in der Stückanforderungsnachricht detektiert werden.

6. Verfahren nach Anspruch 5, wobei mindestens ein Teil der Markierungsinformationen durch den Client in die Stückanforderungsnachricht eingesetzt wird.

7. Verfahren nach Anspruch 6, wobei die Manifestdatei Markierungsinformationen enthält und mindestens ein Teil der Markierungsinformationen durch den Client zum Einsetzen in die Stückanforderungsnachricht verwendet wird.

8. Verfahren nach den Ansprüchen 6 oder 7, wobei der Client mindestens einen Teil der Markierungsinformationen in den Kopfteil der Stückanforderungsnachricht einsetzt.

9. Verfahren nach einem der Ansprüche 1-8, wobei der erste Übermittlungsknoten durch den Client mittels eines ersten Zugangsnetzes und den zweiten Übermittlungsknoten zugänglich ist und der Proxy-Server durch den Client mittels eines zweiten Zugangsnetzes zugänglich ist.

10. Proxy-Server (206, 702), der konfiguriert ist zum Liefern gestückelten Inhalts zu einer Vorrichtung (720), die einen adaptiven HTTP-Streaming-Client (722) enthält, wobei der gestückelte Inhalt auf der Grundlage einer Manifestdatei definiert ist, die eine oder mehrere Stückkennungen und einen oder mehrere zugeordnete Stückzeiger zum Orten eines oder mehrerer Übermittlungsknoten, die konfiguriert sind, ein oder mehrere Stücke, die durch die Stückkennungen identifiziert sind, zu übermitteln, umfasst, wobei
der Proxy-Server **dadurch gekennzeichnet ist, dass** er ein computerlesbares Speichermedium, das computerlesbaren Programmcode, der mit ihm verkörpert ist, enthält, und mindestens einen Mikroprozessor, der an das computerlesbare Speichermedium gekoppelt ist, umfasst, wobei der Mikroprozessor konfiguriert ist, in Reaktion auf die Ausführung des computerlesbaren Programmcodes ausführbare Operationen durchzuführen, die Folgendes umfassen:
Bestimmen, ob ein Stück, das durch eine Stückkennung in einer Stückanforderungsnachricht, die vom Client ausgeht, identifiziert ist, durch einen ersten Übermittlungsknoten (210₁) übermittelt werden soll, wobei die Stückanforderungsnachricht eine erste Netzadresse, die dem ersten Übermittlungsknoten zugeordnet ist, als einen Zielindikator umfasst und das Bestimmen ausgelöst wird, wenn eine oder mehrere Bedingungen, die der Stückanforderungsnachricht zugeordnet sind, erfüllt sind;
Umschreiben, wenn bestimmt wird, dass der erste Übermittlungsknoten das Stück nicht zum Client übermitteln soll, der ersten Netzadresse in der Stückanforderungsnachricht in eine zweite Netzadresse, die einem zweiten Übermittlungsknoten (210₂), der das Stück übermitteln und die Stückanforderungsnachricht zum zweiten Übermittlungsknoten senden kann, zugeordnet ist;
Empfangen einer Stückantwortnachricht, die der Stückanforderungsnachricht zugeordnet ist, wobei die Stückantwortnachricht die zweite Netzadresse als einen Quellindikator umfasst;
Umschreiben vor dem Senden der Stückantwortnachricht zum Client der zweiten Netzadresse in der Antwortnachricht in die erste Netzadresse.

11. Proxy-Server nach Anspruch 10, wobei die ausführbaren Operationen ferner Folgendes umfassen:
Bestimmen, ob die Stückanforderungsnachricht Markierungsinformationen umfasst;
Bestimmen dann, wenn die Markierungsinformationen detektiert werden, ob das Stück durch einen ersten Übermittlungsknoten übermittelt werden kann.

12. Anwendergerät (720), das einen adaptiven HTTP-Streaming-Client (722) umfasst, der konfiguriert ist zum Senden einer oder mehrerer markierter Stückanforderungsnachrichten, die Markierungsinformationen umfassen, zu einem Proxy-Server (206, 702), der wie in einem der Ansprüche 10 oder 11 konfiguriert ist, wobei die eine oder die mehreren markierten Stückanforderungsnachrichten konfiguriert sind, den Proxy-Server auszulösen, und das Anwendergerät Folgendes umfasst:
ein computerlesbares Speichermedium, das computerlesbaren Programmcode, der mit ihm verkörpert ist, enthält, und mindestens einen Mikroprozessor, der an das computerlesbare Speichermedium gekoppelt ist, wobei der Mikroprozessor konfiguriert ist, in Reaktion auf ein Ausführen des computerlesbaren Programmcodes ausführbare Operationen durchzuführen, die Folgendes umfassen:
Empfangen einer Manifestdatei, die eine oder mehrere Stückkennungen und einen oder mehrere zugeordnete Stückzeiger zum Orten eines oder mehrerer Übermittlungsknoten, die konfiguriert sind, ein oder mehrere Stücke, die durch die Stückkennungen identifiziert sind, zu übermitteln, umfasst, zum Anfordern von Stücken, die durch die Stückkennungen identifiziert sind; wobei das Anwendergerät **dadurch gekennzeichnet ist, dass** der Prozessor ferner konfiguriert ist, ausführbare Operationen durchzuführen, die Folgendes umfassen:
Empfangen von Markierungsinformationen zum Markieren von Stückanforderungsnachrichten, wobei eine markierte Stückanforderungsnachricht auslöst, dass der Proxy-Server das Verfahren nach Anspruch 1 ausführt;
Erzeugen einer markierten Stückanforderungsnachricht auf der Grundlage der Manifestdatei und der Markierungsinformationen;
Senden der markierten Stückanforderungsnachricht zum Proxy-Server.

13. Anwendergerät nach Anspruch 12, wobei das Erzeugen der markierten Stückanforderungsnachricht ferner Folgendes umfasst:
Erzeugen einer markierten Stücknachricht auf der Grundlage der Markierungsinformationen in der Manifestdatei oder
Erzeugen einer markierten Stücknachricht durch Einsetzen mindestens eines Teils des mindestens einen Teils der Markierungsinformationen als ein Cookie in die Stückanforderungsnachricht.

14. Anwendergerät nach Anspruch 12, wobei der Client konfiguriert ist zum Starten oder Stoppen der Markierung von Stückanforderungsnachrichten auf der Grundlage einer Auslösenachricht aus dem Netz, wobei der Client die Auslösenachricht mittels eines bandexternen Kommunikationskanals aus einem Netz empfangen kann.

15. Anwendergerät nach Anspruch 14, wobei der bandexterne Kommunikationskanal ein bidirektionaler Websocket-Kommunikationskanal nach rfc6455 ist, der zwischen dem Client und einem Server im Netz aufgebaut ist, um auszulösen, dass ein Client ein Markieren von Stückanforderungsnachrichten startet.

16. Nichttransitorisches computerlesbares Speichermedium zum Speichern mindestens eines Teils einer Manifestdatei, wobei die Manifestdatei Folgendes umfasst:
eine oder mehrere Stückkennungen und einen oder mehrere Stückzeiger, die ausgelegt sind, einem Anwendergerät zu ermöglichen, eine oder mehrere Stückanforderungsnachrichten zu erzeugen, **dadurch gekennzeichnet, dass** die Manifestdatei ferner Folgendes umfasst:
Markierungsinformationen, die zum Markieren mindestens eines Teils der einen oder der mehreren Stückanforderungsnachrichten ausgelegt sind, wobei eine markierte Stückanforderungsnachricht ausgelegt ist zum Auslösen, dass ein Proxy-Server bestimmt, ob ein Stück, das durch eine Stückkennung in einer Stückanforderungsnachricht, die vom Client ausgeht, identifiziert ist, durch einen ersten Übermittlungsknoten übermittelt werden soll.

17. Computerprogrammprodukt, das Software-Codeabschnitte enthält, die konfiguriert sind, dann, wenn sie im Speicher eines Computers ausgeführt werden, die Verfahrensschritte nach einem der Ansprüche 1-9 auszuführen.

## Revendications

1. Procédé de fourniture d'un contenu fragmenté en chunks à un dispositif (720) comprenant un client de streaming adaptatif HTTP (722), ledit contenu fragmenté en chunks étant défini sur la base d'un fichier manifeste comprenant un ou plusieurs identifiants de chunk et un ou plusieurs localisateurs de chunk pour la localisation d'un ou de plusieurs nœuds de distribution configurés pour distribuer un ou plusieurs chunks identifiés par lesdits identifiants de chunk, ledit procédé étant **caractérisé en ce qu'**il comprend l'exécution, par au moins un microprocesseur d'un serveur proxy (206, 702), d'un code de programme lisible par ordinateur permettant :
la détermination si un chunk identifié par un identifiant de chunk dans un message de requête de chunk émanant dudit client doit être distribué ou non par un premier nœud de distribution (210₁), ledit message de requête de chunk comprenant, comme indicateur de destination, une première adresse de réseau associée audit premier nœud de distribution, ladite détermination étant déclenchée si une ou plusieurs conditions associées audit message de requête de chunk sont satisfaites ;
en cas de détermination que ledit premier nœud de distribution ne doit pas distribuer ledit chunk audit client, la réécriture de ladite première adresse de réseau, contenue dans ledit message de requête de chunk, dans une deuxième adresse de réseau associée à un deuxième nœud de distribution (210₂) qui est apte à distribuer ledit chunk, et l'envoi dudit message de requête de chunk audit deuxième nœud de distribution ;
la réception d'un message de réponse de chunk associé audit message de requête de chunk, ledit message de réponse de chunk comprenant, comme indicateur de source, ladite deuxième adresse de réseau ;
avant l'envoi dudit message de réponse de chunk audit client, la réécriture de la deuxième adresse de réseau, contenue dans ledit message de réponse, dans ladite première adresse de réseau.

2. Procédé selon la revendication 1, dans lequel ladite détermination comprend :
l'utilisation d'une base de données de relocalisation pour vérifier si une deuxième adresse de réseau différente de ladite première adresse de réseau est disponible ou non pour la distribution d'un chunk associé audit identifiant de chunk dans ledit message de requête de chunk.

3. Procédé selon la revendication 2, comprenant en outre :
la réception d'informations de relocalisation, lesdites informations de relocalisation comprenant un ou plusieurs identifiants de chunk et une ou plusieurs adresses de réseau associées de nœuds de distribution qui sont configurés pour distribuer des chunks identifiés par lesdits un ou plusieurs identifiants de chunk ;
la mise à jour d'au moins une partie de ladite base de données de relocalisation sur la base desdites informations de relocalisation.

4. Procédé selon l'une quelconque des revendications 1 à 3, dans lequel lesdites une ou plusieurs conditionsune ou plusieurs conditions comprennent : le type de contenu identifié dans ledit message de requête de chunk et/ou un identifiant de client associé audit message de requête de chunk et/ou une heure de réception dudit message de requête de chunk par ledit serveur proxy.

5. Procédé selon l'une quelconque des revendications 1 à 4, dans lequel ladite détermination est déclenchée en cas de détection d'informations de marqueur dans ledit message de requête de chunk.

6. Procédé selon la revendication 5, dans lequel au moins une partie desdites informations de marqueur est insérée dans ledit message de requête de chunk par ledit client.

7. Procédé selon la revendication 6, dans lequel ledit fichier manifeste comprend des informations de marqueur et au moins une partie desdites informations de marqueur est utilisée par ledit client qui l'insère dans ledit message de requête de chunk.

8. Procédé selon la revendication 6 ou 7, dans lequel ledit client insère au moins une partie desdites informations de marqueur dans l'en-tête dudit message de requête de chunk.

9. Procédé selon l'une quelconque des revendications 1 à 8, dans lequel ledit premier nœud de distribution est accessible par ledit client par le biais d'un premier réseau d'accès et dudit deuxième nœud de distribution, et ledit serveur proxy est accessible par ledit client par le biais d'un deuxième réseau d'accès.

10. Serveur proxy (206, 702) configuré pour fournir un contenu fragmenté en chunks à un dispositif (720) comprenant un client de streaming adaptatif HTTP (722), ledit contenu fragmenté en chunks étant défini sur la base d'un fichier manifeste comprenant un ou plusieurs identifiants de chunk et un ou plusieurs localisateurs de chunk associés pour la localisation d'un ou de plusieurs nœuds de distribution configurés pour distribuer un ou plusieurs chunks identifiés par lesdits identifiants de chunk,
ledit serveur proxy étant **caractérisé en ce qu'**il comprend un support de stockage lisible par ordinateur incorporant un code de programme lisible par ordinateur, et au moins un microprocesseur couplé au support de stockage lisible par ordinateur, le microprocesseur, en réponse à l'exécution du code de programme lisible par ordinateur, étant configuré pour réaliser des opérations exécutables comprenant :
la détermination si un chunk identifié par un identifiant de chunk dans un message de requête de chunk émanant dudit client doit être distribué ou non par un premier nœud de distribution (210₁), ledit message de requête de chunk comprenant, comme indicateur de destination, une première adresse de réseau associée audit premier nœud de distribution, ladite détermination étant déclenchée si une ou plusieurs conditions associées audit message de requête de chunk sont satisfaites ;
en cas de détermination que ledit premier nœud de distribution ne doit pas distribuer ledit chunk audit client, la réécriture de ladite première adresse de réseau, contenue dans ledit message de requête de chunk, dans une deuxième adresse de réseau associée à un deuxième nœud de distribution (210₂) qui est apte à distribuer ledit chunk, et l'envoi dudit message de requête de chunk audit deuxième nœud de distribution ;
la réception d'un message de réponse de chunk associé audit message de requête de chunk, ledit message de réponse de chunk comprenant, comme indicateur de source, ladite deuxième adresse de réseau ;
avant l'envoi dudit message de réponse de chunk audit client, la réécriture de la deuxième adresse de réseau, contenue dans ledit message de réponse, dans ladite première adresse de réseau.

11. Serveur proxy selon la revendication 10, dans lequel lesdites opérations exécutables comprennent en outre :
la détermination si ledit message de requête de chunk comprend ou non des informations de marqueur ;
en cas de détection desdites informations de marqueur, la détermination si ledit chunk peut être distribué au non par un premier nœud de distribution.

12. Dispositif utilisateur (720) comprenant un client de streaming adaptatif HTTP (722) configuré pour envoyer un ou plusieurs messages de requête de chunk marqués comprenant des informations de marqueur à un serveur proxy (206, 702) configuré selon la revendication 10 ou 11, lesdits un ou plusieurs messages de requête de chunk marqués étant configurés pour déclencher ledit serveur proxy, ledit dispositif utilisateur comprenant :
un support de stockage lisible par ordinateur incorporant un code de programme lisible par ordinateur, et au moins un microprocesseur couplé au support de stockage lisible par ordinateur, le microprocesseur, en réponse à l'exécution du code de programme lisible par ordinateur, étant configuré pour réaliser des opérations exécutables comprenant :
la réception d'un fichier manifeste comprenant un ou plusieurs identifiants de chunk et un ou plusieurs localisateurs de chunk associés pour la localisation d'un ou de plusieurs nœuds de distribution configurés pour distribuer un ou plusieurs chunks identifiés par lesdits identifiants de chunk, pour la requête de chunks identifiés par lesdits identifiants de chunk ; le dispositif utilisateur étant **caractérisé en ce que** le processeur est configuré en outre pour réaliser des opérations exécutables comprenant :
la réception d'informations de marqueur pour le marquage de messages de requête de chunk, un message de requête de chunk marqué déclenchant ledit serveur proxy pour lui faire réaliser le procédé selon la revendication 1 ;
la génération d'un message de requête de chunk marqué sur la base dudit fichier manifeste et desdites informations de marqueur ;
l'envoi dudit message de requête de chunk marqué au serveur proxy.

13. Dispositif utilisateur selon la revendication 12, dans lequel la génération dudit message de requête de chunk marqué comprend en outre :
la génération d'un message de chunk marqué sur la base d'informations de marqueur dans ledit fichier manifeste ; ou,
la génération d'un message de chunk marqué par insertion, comme cookie, d'au moins une partie de ladite au moins une partie desdites informations de marqueur dans ledit message de requête de chunk.

14. Dispositif utilisateur selon la revendication 12, dans lequel ledit client est configuré pour lancer ou interrompre le marquage de messages de requête de chunk sur la base d'un message déclencheur provenant du réseau, le client étant susceptible de recevoir le message déclencheur par le biais d'un canal de communication hors bande depuis un réseau.

15. Dispositif utilisateur selon la revendication 14, dans lequel ledit canal de communication hors bande est un canal de communication bidirectionnel de type Websocket, tel que défini dans la norme rfc6455, établi entre le client et un serveur dans le réseau dans le but de déclencher un client pour lui faire lancer le marquage de messages de requête de chunk.

16. Support de stockage non transitoire lisible par ordinateur pour le stockage d'au moins une partie d'un fichier manifeste, ledit fichier manifeste comprenant :
un ou plusieurs identifiants de chunk et un ou plusieurs localisateurs de chunk pour permettre à un dispositif utilisateur de générer un ou plusieurs messages de requête de chunk, **caractérisé en ce que** ledit fichier manifeste comprend en outre :
des informations de marqueur conçues pour marquer au moins une partie desdits un ou plusieurs messages de requête de chunk, un message de requête de chunk marqué étant conçu pour déclencher un serveur proxy pour lui faire déterminer si un chunk identifié par un identifiant de chunk dans un message de requête de chunk émanant dudit client doit être distribué ou non par un premier nœud de distribution.

17. Produit-programme d'ordinateur, un produit-programme d'ordinateur comprenant des parties de code de logiciel configurées, lorsqu'elles sont exécutées dans la mémoire d'un ordinateur, pour réaliser les étapes de procédé selon l'une quelconque des revendications 1 à 9.
